# EUROPEAN PATENT APPLICATION

(11) **EP 2 533 140 A1**
(43) Date of publication of application: **12.12.2012**
(21) Application number: 11168951.9
(22) Date of filing: 07.06.2011
(51) Int. Cl.: G06F 3/048, H04M 1/725

(54) **Electronic communication device and method for displaying icons**

(71) Applicant: Research In Motion Limited, Waterloo, ON N2L 3W8 (CA)
(72) Inventor: Logan, Adrian Michael, Waterloo, Ontario N2L 3W8 (CA); Garg, Neeraj, Milton, Ontario L9T 6N6 (CA)
(74) Representative: MERH-IP Matias Erny Reichl Hoffmann

(57) **Abstract**

An electronic communication device includes an input interface for receiving input, a display for displaying output, and a processor. The processor is in communication with the input interface and the display. When the processor determines that a new notification event for an application has occurred, the processor causes an icon for activating the application to be displayed on the display. When the processor determines that the new notification event has not occurred, the processor does not display the icon.

## Description

### Field

This disclosure relates to electronic communication devices and methods thereof.

### Background

Electronic communication devices, such as smart phones, typically include displays capable of displaying icons related to applications available for use on the device.

There are limits in what can be done with such icons. Naturally, an icon can be used to launch the associated application. Icons can also typically be added or removed from a home screen of the device when, for example, an application is installed or removed. Users may also be permitted to manually hide icons. It is also known for icons to be visually augmented with transient information, such as a new message count.

Since icons are a primary way in which a user interacts with an electronic communication device, there is a need to make icon behavior and the resulting user interactions more efficient. Not only can this result in increased efficiency for the user when performing tasks on the device, but also resources of the device can be used more effectively thereby. An according method and electronic communication device are specified in claims 9 and 1, respectively.

### Brief Description of the Drawings

In the drawings, which illustrate by way of example only, embodiments of the present application,

Fig. 1 is a block diagram of an electronic communication device according to one embodiment.

Figs. 2a-b are schematic diagrams of the electronic communication device displaying and not displaying an icon.

Fig. 3 is a state diagram for displaying the icon.

Fig. 4 is a schematic diagram of the electronic communication device displaying the icon with a characteristic indication.

Fig. 5 is a schematic diagram of the electronic communication device displaying another icon in place of the icon, which is not displayed.

Figs. 6a-d are schematic diagrams of an electronic communication device displaying an icon for activating a messaging application in a task switcher according to another embodiment.

Fig. 7 is a flowchart of a method of displaying and hiding an icon.

Fig. 8 is a schematic diagram of an electronic communication device displaying a split task switcher according to another embodiment.

Fig. 9 is a schematic diagram of an electronic communication device displaying a notification viewer according to another embodiment.

Figs. 10a-b are schematic diagrams of an electronic communication device displaying an icon that activates an application according to another embodiment.

### Detailed Description

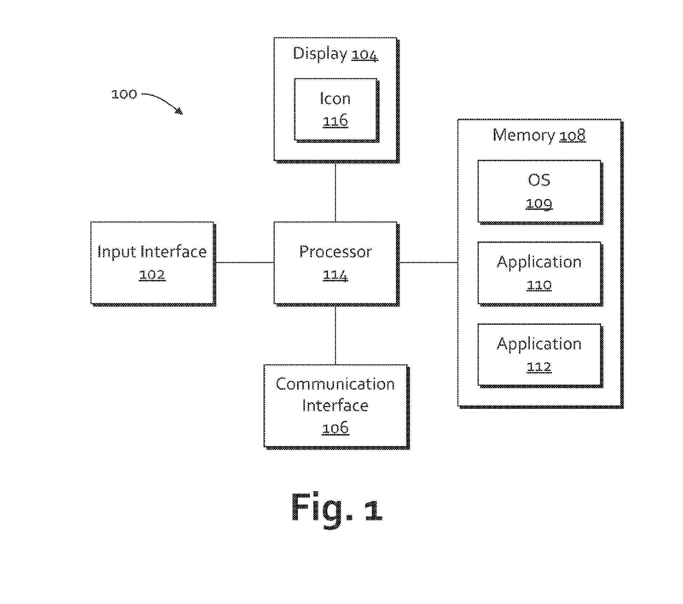

Fig. 1 shows a block diagram of an electronic communication device 100 according to one embodiment. Generally, the electronic communication device 100 can be a mobile phone, a cell phone, a smart phone, a tablet computer, or the like. Features and aspects described elsewhere herein can be used with this embodiment.

The electronic communication device 100 includes an input interface 102 for receiving input from a user, a display 104 for displaying output to a user, a communication interface 106 for sending and receiving data (such as messages), a memory 108 that stores an operating system (OS) 109 and applications 110-112, and a processor 114. The processor 114 is in communication with the input interface 102, the display 104, the communication interface 106, and the memory 108. In this embodiment, the electronic communication device 100 is a unitary portable device with a rigid housing, and thus the processor 114 is electrically connected to the other components 102-108 by way of conductive traces on a circuit board, flexible conductors, a bus, or similar structure. In other embodiments, the electronic communication device 100 is distributed over a larger area with the processor 114 being connected to the other components 102-108 via conductive wires, wireless signals, a network, or similar. The device 100 can further include components such as a power source and audio output interface, these being omitted from view for the sake of clarity.

The input interface 102 can include a keyboard, keypad, touch-screen, track-pad, a combination of such, or any other interface capable of receiving input from a user. Such user input can include commands to control operations of the device 100, to manage data (*e.g.,* a user's personal data, message content, *etc*), and the like. The input interface 102 can include hardware and firmware elements. For example, a QWERTYkeyboard can include physical keys as well as firmware that maps key-presses to key-code signals that the OS 109 can understand.

The display 104 can include a light-emitting diode (LED) display, liquid-crystal display (LCD), active-matrix organic light-emitting diode (AMOLED) display, or similar visual display. The display 104 serves to display visual output to a user. The display 104 can be a touch-screen. The display 104 can utilize hardware and software elements. For example, an LED display can include display logic that is driven by a software driver of the OS 109.

The communication interface 106 interfaces with a communication medium (*e.g.*, wirelessly over air, using wires, *etc*). The communication interface 106 can include a two-way radio communications interface (*e.g.*, cellular telephone interface), a wireless local area network (WLAN) interface, a wired network interface, or the like. The communication interface 106 can be in communication with a remote server, such as a mail or messaging server. The communication interface 106 is capable of sending and receiving messages, such as e-mail messages, instant messages (IMs), short message service (SMS) messages, multimedia message service (MMS) messages, social network status updates, and the like. The communication interface 106 can use hardware and software elements, such as an antenna and supporting circuitry, as well as software or firmware for information exchange with the OS 109 and applications 110, 112. In some embodiments, the communication interface 106 can be omitted.

The memory 108 can include random-access memory (RAM), read-only memory (ROM), flash memory, a magnetic or optical disc, a combination of such, or any other type of memory. The memory 108 can be implemented using hardware and software, such as an array of physical semiconductor-based memory cells which are addressable by a software-based memory management scheme of the OS 109. In this embodiment, the memory 108 stores the OS 109, the applications 110-112, data related thereto, and user data (such as stored messages).

The processor 114 can include a single or multiple processors, one or more multi-core processors, multiple specialized processors (*e.g.*, a main processor and a specialized processor for controlling the display 104), or the like. The processor 114 operates on software stored in the memory 108 (*e.g.,* OS, applications, *etc*) and can control operations of the device 100. For example, the processor 114 is capable of executing program code that causes the display 104 to display or not display a particular image, such as an icon. In this disclosure, actions described as performed by either the processor 114 or the OS 109 are generally performed by the processor 114 executing the OS 109.

In this embodiment, the processor 114 can determine when a notification event related to the application 110 has occurred. When the processor 114 determines that the notification event has occurred, the processor 114 causes a first icon 116 for activating the first application 110 to be displayed on the display 104. On the other hand, when the processor 114 determines that the notification event has not occurred, the processor 114 does not display the first icon 116 on the display 104. A notification event is generally an event related to the application's normal, ongoing operation to which a user's attention is to be drawn. A notification event does not include events such as installing or removing the application 110 from the device 100.

In this disclosure, not displaying an icon is synonymous with preventing the icon from being displayed, omitting the icon, and hiding the icon. Further, activating an application as described herein can include switching focus to the application from another application or from a home screen or from the OS, launching or executing the application, or similar. The concepts of switching, switching focus, launching, and executing are all examples of activating as the term is used in this disclosure, and the specific way in which the application is activated may depend on the capabilities of the OS used or another factor. For example, depending on the nature of the OS, examples of inactive applications can include an application that is running in the background (*e.g.*, at a reduced process priority), an application in a suspended state (*e.g.*, retaining state information but not running the usual processes), an application that is running normally but simply not displaying the usual amount of information on the display, and an application that does not have any processes running. Activating such applications can include, respectively, increasing priority of the application's processes, resuming suspended processes, brining the application's user interface to the fore, and launching a process of the application. Activating an application can simply mean bringing the application's user interface to the attention of the user.

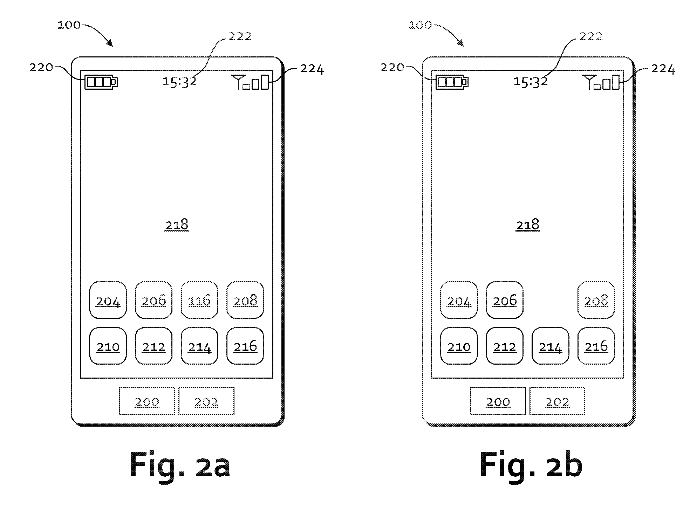

Figs. 2a-b show the electronic communication device 100 displaying and not displaying the first icon.

As shown, the display 104 is a touch-screen and the input interface 102 includes the touch-screen as well as physical buttons 200, 202. Aplurality of icons, namely first icon 116 and second icons 204-216, are displayed on a home screen 218 shown on the display 104. The appearance of the icons 204-216 and 116 can reflect the general functionality of the associated application (*e.g.*, a mailbox for a mail application, a globe for a Web browser application, a wagon for an exploration game, *etc*).

The home screen 218 can be a component of the OS 109 or can be an application. The home screen 218 can be configured to display a background image, widgets, alerts, or the like. The home screen 218 can include several different screens that can be traversed by user input, such as by a user swiping her finger across the touch-screen left or right. The home screen 218 can be larger than the display 104 and thus traversed via panning.

Each icon 204-216 and 116 is associated with an application present on the device 100. Not all of these applications need be active at the same time. For example, the application corresponding to the icon 204 is not active in that it does not have any processes being run by the processor 114. When the user touches the icon 204, then the processor 114 starts a process of the application and the application becomes active. In another example, the application corresponding to the icon 206 has a background process being run by the processor 114, but is not active because its interface is not available to the user. When the user touches the icon 206, a user interface process is started and the application then becomes active.

Also shown on the home screen 218 are a battery charge indicator 220, a time indicator 222, and a wireless signal strength indicator 224.

As shown in Fig. 2a, the processor 114 has determined that a notification event of the first application 110 has occurred. Accordingly, the processor 114 causes a first icon 116 to be displayed on the display 104. As shown in Fig. 2b, the processor has determined that the notification event of the first application 110 has not occurred. Accordingly, the processor 114 does not display the first icon 116 for activating the first application 110 on the display 104. Meanwhile, the icons 204-216 remain displayed irrespective of the notification event having occurred.

With the notification event having occurred and the icon 116 being displayed, the associated application can be readily activated by, for example, a user tapping the icon 116 with her finger. Once the notification event has been attended, the notification event can be ignored for purposes of displaying the icon 116. That is, while the application may store past notification events and related data, the processor 114 next determines that a recent notification event has not yet occurred and the icon 116 is not displayed. In short, past occurrences of the notification event are ignored after they have been attended, so that the icon 116 is cleared from the display 104.

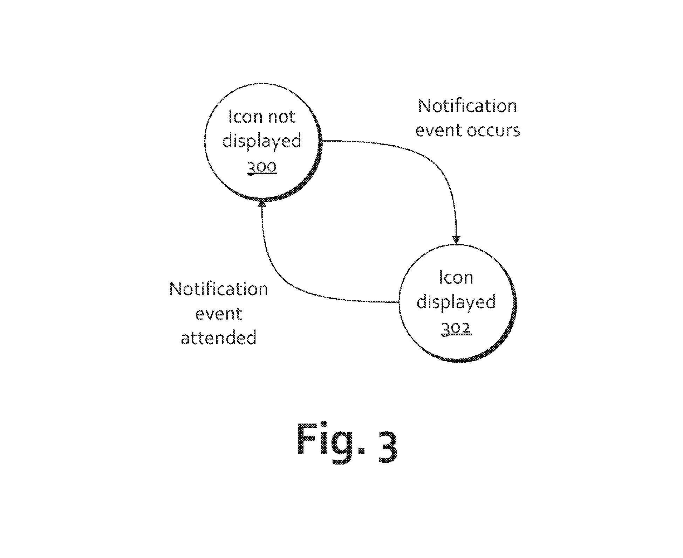

The state diagram of Fig. 3 illustrates the above behavior. In state 300, the icon 116 is not displayed. When in state 300, the processor 114 checks for notification events. When a notification event occurs, state 302 is entered and the icon 116 is displayed. When in state 302, the processor 114 determines whether the notification event has been attended to by the user. In response to the notification event being attended, state 300 is again entered.

The differing behavior of the specific icons 204-216 and 116 is illustrative, and any of the icons 204-216 can also be displayed and not displayed based on a notification event specific to the respective underlying application.

The processor 114 controlling the display of the icon 116 can be part of a home-screen update process associated with the home screen 218. For example, each time the home-screen update process is performed, the process checks whether each application has had a notification event occur, and then accordingly causes or prevents displaying of the associated icon. In another embodiment, the home screen 218 can have an event listener process that listens for notification events and initiates display or clearing of the associated icons.

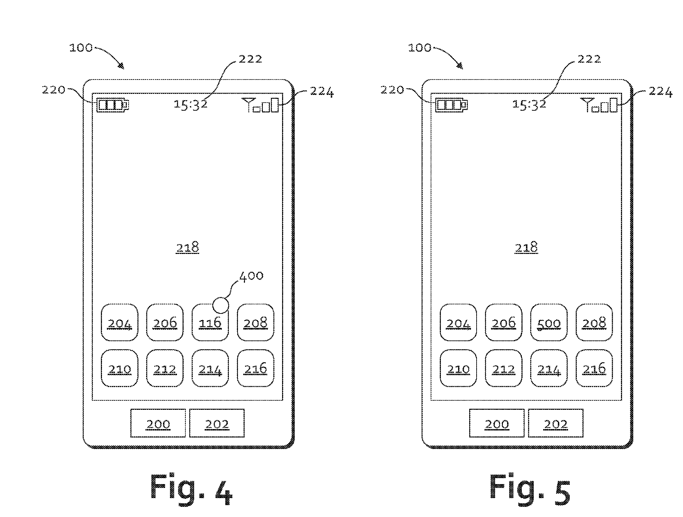

Fig. 4 shows that the first icon 116, when being displayed as a result of the occurrence of the notification event, can also include an indication of a characteristic of the notification event. The characteristic indication 400 can include an image, a number, a badge, a smaller icon, or any other kind of indication related to the notification event. The characteristic indication 400 can overlay the icon 116 or can be integrally composited with the icon 116. One purpose of the characteristic indication 400 can be to distinguish different types or grades of notification events that each cause the first icon 116 to be shown. For example, two notification events having different levels of urgency may each cause the icon 116 to be displayed, where the differing levels of urgency can be indicated by different characteristic indications 400 (*e.g*., yellow and red stars). The characteristic indication 400 can also be used to simply draw a user's attention to the fact that the icon 116 is being displayed. In another embodiment, the characteristic indication is an icon different from the icon 116 initially displayed, *e.g*., an open mailbox icon that replaces the initially displayed closed mailbox icon. When more than one of different types of characteristic indication are required to be displayed (*e.g.*, multiple new and different notification events exist), the processor 114 can display a selected one of the characteristic indications according to predetermined logic. For example, the processor 114 can select the characteristic indication associated with the most recent new notification event. Count-based characteristic indications can simply be incremented.

Fig. 5 shows the electronic communication device 100 displaying another icon 500 in place of the first icon 116, when the first icon 116 is not displayed due to the notification event having not yet occurred. Displaying the other icon 500 in the empty space left by the absence of the first icon 116 can result in a more efficient use of space on the home screen 218.

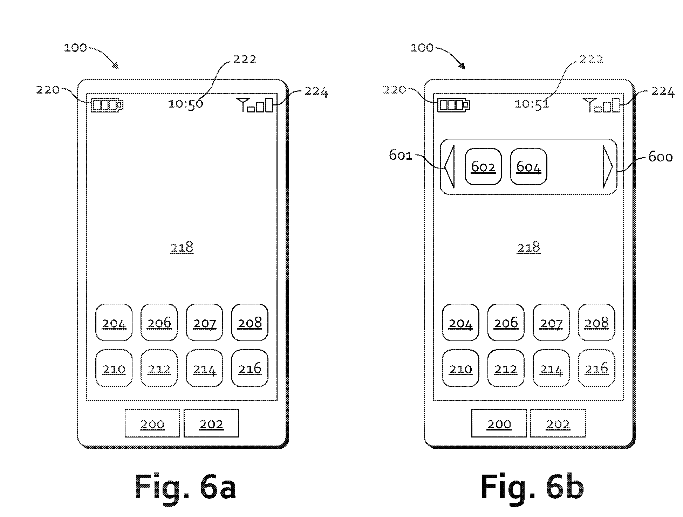

Figs. 6a-d show an electronic communication device 100 displaying an icon for activating a messaging application in a task switcher according to another embodiment. Fig. 1 and related description can be referenced for details of the device 100. Like reference numerals are used for clarity and to avoid repetition, and the relevant portions of this description may be referenced. Features and aspects described elsewhere in this disclosure can be used with this embodiment.

Fig. 6a shows the electronic communication device 100 before a new message is received and when a task switcher is inactive. Icons 204-216 can be tapped to activate associated applications.

In Fig. 6b, a task switcher is activated when the processor 114 detects a task-switching input at the input interface 102. This can be achieved via a user tapping an icon associated with the task switcher, pressing one of the physical buttons 200, 202, holder her finger on an empty portion of the home screen 218, or by another method. The task switcher can be activated from any interface shown on the display 104 of the device 100, the home screen 218 being but one example. The task switcher can be an application or a component of the OS 109.

The task switcher includes a task switcher user interface element 600 (*e.g.*, a window) that overlays a portion of the home screen 210. In another embodiment, the task switcher fills the entire display 104. The task switcher user interface element 600 can include one or more scroll interface elements 601 capable of receiving a user input to initiate scrolling the contents of the user interface element 600. When the processor 114 detects such input, the processor 114 causes the content (*i.e.,* icons) of the task switcher user interface element 600 to be scrolled, thereby allowing the user to scroll through additional content.

The task switcher user interface element 600 can contain one or more second icons 602, 604 associated with applications that are not active. When the user taps one of the icons 602, 604, the respective application is brought to the fore by, for example, filling the display 104 with its user interface.

The task switcher can be deactivated and the user interface element 600 removed from the display 104 automatically after activation of the application or after detecting another input at the user interface.

In this embodiment, a messaging application (*e.g.*, application 110 of Fig. 1) is associated with a first icon 606. When the icon 606 is tapped on the touch-screen or otherwise indicated by the user (*e.g*., via one of the buttons 200, 202), the messaging application is activated. As shown in Fig. 6b, the processor 114 has determined that a new message has not yet been received via the communication interface 106, and accordingly, the processor 114 does not display the icon 606 for activating the messaging application in the task switcher user interface element 600 on the display 104.

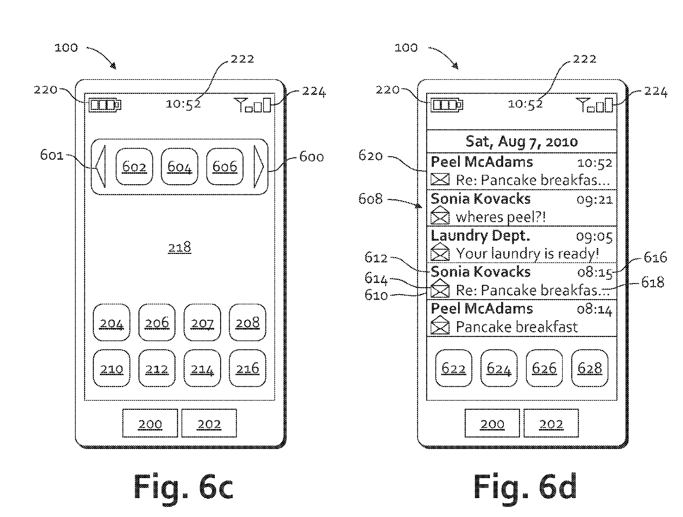

With reference to Fig. 6c, the processor 114 determines that a new message has been received via the communication interface 106. Accordingly, the processor 114 causes the icon 606 for activating the messaging application to be displayed in the task switcher user interface element 600 in response to detecting of the task-switching input to activate the task switcher. The icon 606 is then available to activate the messaging application. In this embodiment, the icon 606 is displayed alongside the other icons 602, 604 that are displayed irrespective of the new message having been received. The icon 606 can additionally show a characteristic indication 400 (see Fig. 4) of the new message.

When the icon 606 is tapped by the user to activate the messaging application, a user interface of the messaging application can then be displayed on the display 104. For example, a message listing 608 can be displayed on the display 104, as shown in Fig. 6d. The message listing 608 can include a plurality of message interface elements 610, each being representative of a different message sent to or received by the device 100. Each message interface element 610 can include a sender indicator 612 (*e.g.*, the sender's name in text), a message status indicator 614 (*e.g.*, icons representing read and unread statuses), a message time indicator 616 (*e.g.*, a time that the message was sent or received), and a subject indicator 618 (*e.g.*, a subject line in text). In this example, the new message is represented at the top of the message listing 608 by message interface element 620. When a message interface element 610, 620 is tapped or otherwise indicated, the processor 114 can cause associated message content to be displayed. Also provided are icons 622-628 for conducing messaging application operations, such as opening a message, deleting a message, composing a new message, and exiting the messaging application.

In this embodiment, when the message listing is removed from the display 104 by, for example, the user navigating to another interface of the messaging application or another application, a new message is no longer considered to be a new message for purposes of displaying the icon 606. That is, when determining whether to display the messaging application icon 606 in the task switcher user interface element 600, the processor 114 considers a new message to be any message received since the messaging application last displayed the message listing 608.

In other embodiments, new messages are unread messages, that is, messages whose body content has not displayed on the display 104.

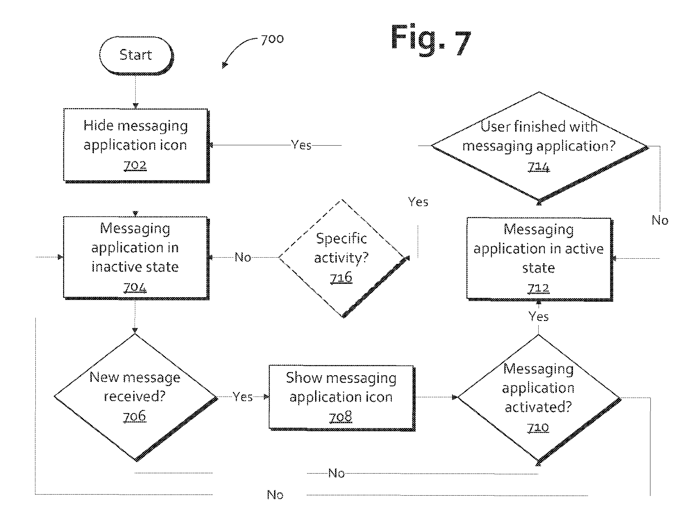

Fig. 7 is a flowchart of an embodiment of a method 700 of displaying and not displaying an icon of a messaging application. The method 700 applies to other kinds of applications as well and can be used with or without a task switcher. The method 700 will be described with reference to the electronic communication device 100 by way of example only. Features and aspects described elsewhere in this disclosure can be used with this embodiment.

At step 702, the electronic communication device 100 has not yet received a new message, and the icon of the associated messaging application is not displayed.

At step 704, the messaging application is in an inactive state. This can occur after the operating system 109 of the electronic communication device 100 is booted, after a user exits the messaging application, and in other situations.

At step 706, the processor 114 checks whether the electronic communication device 100 has received a new message. When a new message has been received, then the icon of the associated messaging application is displayed (*e.g.*, in the task switcher user interface element 600, on the home screen 218, *etc*) at step 708. The processor 114 then checks whether the user has activated the messaging application, at step 710. Referring back to step 706, when a new message has not been received, the processor 114 can still check at step 710 whether the user has activated the messaging application. There can be other ways to activate the messaging application, such as by way of a shortcut key, a menu command, a notification button, or a permanently displayed icon.

When, at step 710, the messaging application is not activated by the user, the method returns to step 702. On the other hand, when the messaging application is activated, the messaging application is placed in an active state, at step 712. The user can then interact with the messaging application by, for example, reading the new message, perusing the message listing 608, or replying to the new message.

When the user is finished with the messaging application, she can initiate exit of the messaging application at step 714. Then, at optional step 716, the processor 114 can determine whether the user performed an activity in the messaging application that is to result in the icon being hidden. The specific activity can include displaying the messaging listing 608, reading the new message, or other activity. When the processor 114 determines that the specific activity was not carried out during step 712, the messaging application is exited and placed in the inactive state of step 704 with the icon still being displayed *(i.e.,* step 702 is skipped). When the processor 114 determines that the specific activity was carried out, then step 702 is performed and the messaging application icon is hidden. When the check for specific activity is omitted (or equivalently when the specific activity is defined as simply activating the messaging application), then the method returns directly to step 702 upon exit of the messaging application at step 714.

The steps of method 700 are illustrative and, depending on implementation, some steps may be combined, further separated, or omitted. The term "step" is used for ease of understanding only.

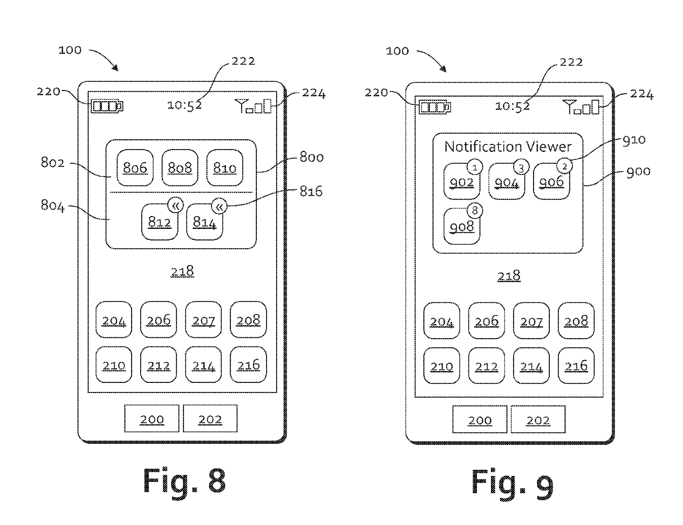

Fig. 8 shows an electronic communication device 100 displaying a task switcher according to another embodiment. Fig. 1 and related description can be referenced for details of the device 100. Like reference numerals are used for clarity and to avoid repetition, and the relevant portions of this description may be referenced. Features and aspects described elsewhere in this disclosure can be used with this embodiment.

In this embodiment, a task switcher is provided. This task switcher is similar to the task switcher described with reference to Figs. 6a-d, and only differences between the two will be discussed in detail.

The task switcher includes a task switcher user interface element 800 (*e.g.*, window) that can be shown or hidden based on user input. The task switcher user interface element 800 is divided into a plurality of regions. A first region 802 displays icons 806-810 associated with inactive applications. When a user taps or otherwise indicates one of the icons 806-810, the associated application is activated. A second region 804 displays icons 812-814 associated with applications that have new notification events. The icons 812-814 can include characteristic indications 816, which in this example are graphical badges superimposed over the icons 812-814. When a user taps one of the icons 812-814, the associated application is activated. When the associated application is activated, data related to the new notification event can be displayed automatically. For example, when the notification event represents a meeting reminder of a calendar application represented by the icon 812, the meeting details can be automatically displayed in response to the user tapping the icon 812.

The first region 802 can be limited to display only icons associated with inactive applications that do not have new notification events, while the second region 804 can be limited to display only icons associated with inactive applications that do have new notification events. Alternatively, the second region 804 can be limited to display only icons associated with applications (inactive or not) that have new notification events.

The task switcher user interface element 800 can be scrollable horizontally only, vertically only, or both horizontally and vertically. This can allow the task switcher user interface element 800 to include more icons than its size permits it to display at one time. One or more scroll interface elements (see ref. 601 of Fig. 6) can also be provided to assist the user in scrolling within the task switcher user interface element 800.

Fig. 9 shows an electronic communication device 100 displaying a notification viewer according to another embodiment. Fig. 1 and related description can be referenced for details of the device 100. Like reference numerals are used for clarity and to avoid repetition, and the relevant portions of this description may be referenced. Features and aspects described elsewhere in this disclosure can be used with this embodiment.

In this embodiment, a notification viewer is provided. This notification viewer is similar to the task switchers described elsewhere herein, and only differences will be discussed in detail.

The notification viewer includes a notification viewer user interface element 900 (*e.g.*, window). The notification viewer user interface element 900 can be shown or hidden based on user input. The notification viewer user interface element 900 is limited to displaying only icons 902-908 of applications that have new notification events. Each icon can be tapped or otherwise indicated by the user to activate the associated application, which can be configured to automatically display data relevant to one or more than one of the new notification events for that application.

In addition, each of the icons 902-908 includes a characteristic indication 910, which is this example are counts of unattended new notification events. Depending on the application, such counts can represent new messages, unread messages, new game moves, application updates, meeting/ appointment reminders, and the like.

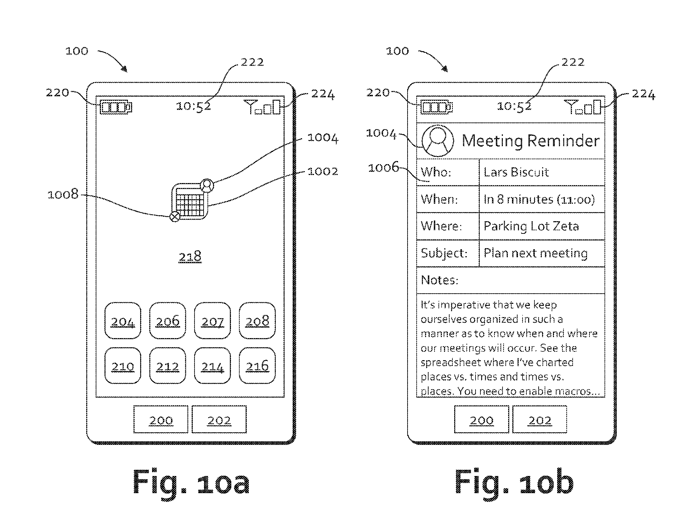

Figs. 10a-b show an electronic communication device 100 displaying an icon that activates an application according to another embodiment. Fig. 1 and related description can be referenced for details of the device 100. Like reference numerals are used for clarity and to avoid repetition, and the relevant portions of this description may be referenced. Features and aspects described elsewhere in this disclosure can be used with this embodiment.

In this embodiment, an icon 1002 for an application that has a new notification event can be displayed on the home screen 218 in location away from the other icons 204-216. As described elsewhere herein, the icon 1002 is not displayed when the application does not have a new notification event. However, one of the other icons, for example icon 212, can be associated with the same application and displayed irrespective of new notification events. That is, the application can be activated at any time using the icon 212, while the user is given the additional icon to 1002 activate the same application when a new notification exists.

The icons 212, 1002 can activate the same application in different ways. For example, the icon 212 can activate the application with the usual user interface displayed, whether that is a default user interface, the last user interface used by the user, or another user interface for the application. On the other hand, the icon 1002 can activate the application so that the application automatically (*i.e*., without further user intervention) shows the user interface relevant to the new notification event.

A characteristic indication 1004 can also be provided for the icon 1002. The characteristic indication 1004 can be specific to the type of notification event. In one example, the characteristic indication 1004 is graphical and includes a different image for each of several different kinds of notification events. For example, if the application is a calendar application, the different kinds of notification events can be represented by images of a clock (for appointments), a person (for meetings), and a checkmark (for tasks). In another example, the characteristic indication 1004 is graphical and includes an image specific to a person (such as his/her photograph) who is associated with the new notification event. When more than one type of characteristic indication is to be displayed, the processor can display a selected one according to predetermined logic, such as the characteristic indication associated with the most recent new notification event.

By way of example, consider a time-related event application, such as a calendar application. The icon 212 activates the calendar application when tapped by the user and displays the last viewed one of an agenda view, a week view, and a month view. When the user wishes to create a new appointment, she can tap the icon 212 to do so at any time. The icon 212 is displayed irrespective of new notification events for the calendar application.

The calendar application stores time related events, such as meetings (more than one person), appointments (one person only), and tasks. Regardless of whether the calendar application is active or not, a process of the calendar application is continually run by the processor 114 to check whether a current time of the device 100 has reached a notification time of a time-related event. The notification time can be a user-selected reminder time prior to the scheduled start time of the time-related event, for example.

When the current time of the device 100 reaches the notification time of the time-related event (*e.g*., a meeting), the processor 114 determines that the calendar application has a new notification event. Accordingly, the processor 114 causes the icon 1002 for the calendar application to be displayed on the display 104. The processor 114 further causes the characteristic indication 1004 to be displayed with the icon 1002. In this example, the characteristic indication 1004 is a reduced version of a photograph of the person with whom the meeting is scheduled. The photograph can be pulled from a contacts application data store that stores contact information.

When the user taps the icon 1002, the calendar application is activated and then automatically displays a meeting reminder user interface, which can include populated meeting data fields 1006 and the photograph 1004, as shown in Fig. 10b. The user can then interact with the meeting reminder as usual. When the user returns to the home screen 218, the icon 1002 is not displayed since the user has attended the notification event.

The icon 1002 can also be removed from the display 104 without the user having to attend the notification event. This can be achieved by providing a user interface element for removing the icon, such as a clear button 1008 that can be tapped to remove the icon from the display 104. Additionally or alternatively, a timer can be started when the icon 1002 is first displayed. When the timer expires the icon 1002 can be automatically removed from the display 104. The timer can be configurable by the user, and example times include 5 minutes, 1 hour, 1 day, and indefinitely.

Each of the above features and aspects (*e.g.*, the placement of icon 1002, the characteristic indication types, the clear button, and the timer) can be used independently with other embodiments, including those embodiments described elsewhere herein.

Examples of the applications contemplated and their respective notification events are listed in the following table.

| *Type of Application* | *Examples of Applications* | *Examples of Notification Events* |
|---|---|---|
| Messaging | Email application | New message |
| | IM application | Unread message |
| | SMS application | Contact request |
| | MMS application | Follow-up reminder |
| Time-related event | Calendar application | Appointment reminder |
| | Task application | Meeting reminder |
| | Project management | Task due reminder |
| | application | Action needed reminder |
| Social networking | Micro-blogger | Friend request |
| | Social networking site | New event alert |
| | Professional networking site | New friend status |
| | | New message |
| Location-based | Check-in application | New location arrived at |
| services | | New message about current location |
| Games | Turn-based games | New turn |
| | Real-time games | New message |
| | | New game request |
| Other | OS | New update available |
| | Camera | New content available |
| | Media player | |
| | News reader | |

The above table is not intended to be exhaustive or restrictive. For example, applications may be of more than one type and/or may have more, fewer, or different types of notification events.

An advantage of the present disclosure is that home screens can be made less cluttered. Applications that are not used very often or that are only regularly used in response to notification events do not necessarily need permanent icons. Displaying and hiding these icons as described herein can lead to more efficient use of mobile electronic devices and their power and processing resources. Since icons that do not need to be displayed are not displayed, users can experience more efficient use of such devices. Moreover, efficiency can also be gained by providing icons when and where they are needed with additional information pertaining to the reason an icon is being provided. For example, a user need not waste device resources activating an application if the icon contains salient information to help the user make that decision.

In one embodiment, electronic communication device includes an input interface for receiving input, a display for displaying output, a communication interface for receiving messages, and a processor in communication with the input interface, the display, and the communication interface. The processor is configured for causing an icon for activating a messaging application to be displayed on the display when determining that a new message has been received via the communication interface. The processor is further configured for not displaying the icon for activating the messaging application on the display when determining that the new message has not been received via the communication interface.

The processor can be further capable of detecting an input at the input interface and causing the icon to be displayed in response to the detecting of the input.

The processor can be further capable of causing a task switcher including the icon to be displayed on the display.

The task switcher can further include another icon for activating another application, the other icon of the other application being displayed irrespective of the new message being received via the communication interface.

The processor can be further capable of causing the task switcher to be scrolled in response to a scrolling input detected at the input interface.

The icon can include an indication of an unread status of the new message.

The processor can be further capable of causing a message count to be displayed in association with the icon.

The new message can be a message received via the communication interface while the messaging application is inactive and since the messaging application was previously activated to display a message listing on the display.

In another embodiment, an electronic communication device includes an input interface for receiving input, a display for displaying output, a memory storing a first application, and a processor in communication with the input interface, the display, and the memory. The processor is configured for causing a first icon for activating the first application to be displayed on the display when determining that a notification event of the first application has occurred. The processor is further configured for not displaying the first icon for activating the first application on the display when determining that the notification event of the first application has not occurred.

The processor can be further capable of causing a task switcher including the first icon to be displayed on the display.

The task switcher can further include a second icon for activating a second application, the second icon being displayed irrespective of the notification event having occurred.

The processor can be further capable of causing the task switcher to be scrolled in response to a scrolling input detected at the input interface.

The processor can be further capable of detecting an input at the input interface and causing the first icon to be displayed in response to the detecting of the input.

The first icon can include an indication of a characteristic of the notification event.

The electronic communication device can further include a communication interface in communication with the processor. The first application can include a messaging application and the notification event can include receiving a new message via the communication interface.

The first application can include a time-related event application and the notification event can include a current time reaching a notification time of a time-related event.

In another embodiment, a method for an electronic communication device includes checking whether the electronic communication device has received a new message. When the electronic communication device has received the new message, the method displays an icon for activating a messaging application associated with the new message. When the electronic communication device has not received the new message, the method does not display the icon for activating the messaging application.

The method can further include displaying another icon for activating another application irrespective of the new message being received by the electronic communication device.

The method can further include displaying a status of the new message with the icon of the messaging application.

The method can further include placing the application in an inactive state before checking whether the electronic communication device has received the new message, the new message being a message received at the electronic communication device while the messaging application is in the inactive state and since the messaging application was previously activated to display a message listing on the display.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

While the foregoing provides certain non-limiting example embodiments, it should be understood that combinations, subsets, and variations of the foregoing are contemplated. The monopoly sought is defined by the claims.

## Claims

1. An electronic communication device comprising:
an input interface for receiving input;
a display for displaying output;
a communication interface for receiving messages; and
a processor in communication with the input interface, the display, and the communication interface, the processor configured for:
when determining that a new message has been received via the communication interface, causing an icon for activating a messaging application to be displayed on the display; and
when determining that the new message has not been received via the communication interface, not displaying the icon for activating the messaging application on the display.

2. The electronic communication device of claim 1, wherein the processor is further capable of detecting an input at the input interface, wherein the processor causes the icon to be displayed in response to the detecting of the input.

3. The electronic communication device of any of claims 1 to 2, wherein the processor is further capable of causing a task switcher comprising the icon to be displayed on the display.

4. The electronic communication device of claim 3, wherein the task switcher further comprises another icon for activating another application, the other icon of the other application being displayed irrespective of the new message being received via the communication interface.

5. The electronic communication device of any of claims 3 to 4, wherein the processor is further capable of causing the task switcher to be scrolled in response to a scrolling input detected at the input interface.

6. The electronic communication device of any of claims 1 to 5, wherein the icon comprises an indication of an unread status of the new message.

7. The electronic communication device of any of claims 1 to 6, wherein the processor is further capable of causing a message count to be displayed in association with the icon.

8. The electronic communication device of any of claims 1 to 7, wherein the new message is a message received via the communication interface while the messaging application is inactive and since the messaging application was previously activated to display a message listing on the display.

9. A method for an electronic communication device, the method comprising:
checking whether the electronic communication device has received a new message;
when the electronic communication device has received the new message, displaying an icon for activating a messaging application associated with the new message; and
when the electronic communication device has not received the new message, not displaying the icon for activating the messaging application.

10. The method of claim 9 further comprising displaying another icon for activating another application irrespective of the new message being received by the electronic communication device.

11. The method of any of claims 9 to 10 further comprising displaying a status of the new message with the icon of the messaging application.

12. The method of any of claims 9 to 11 further comprising placing the application in an inactive state before checking whether the electronic communication device has received the new message, the new message being a message received at the electronic communication device while the messaging application is in the inactive state and since the messaging application was previously activated to display a message listing on the display.

13. The method of any of claims 9 to 12 further comprising displaying a task switcher comprising the icon on the display.

14. The method of any of claims 9 to 13, wherein the icon comprises an indication of an unread status of the new message.

15. The method of any of claims 9 to 14 further comprising displaying a message count in association with the icon.

## Amended claims

### Amended claims in accordance with Rule 137(2) EPC.

**1.** An electronic communication device (100) comprising:
an input interface (102) for receiving input;
a display (104) for displaying output;
a communication interface (106) for receiving messages; and
a processor (114) in communication with the input interface (102), the display (104), and the communication interface (106), the processor (114) configured for:
when determining that a new message has been received via the communication interface (106), causing an icon (116) for activating a messaging application to be displayed on the display (104); wherein the icon comprises an indication (400) of a level of urgency of the new message; and
when determining that the new message has not been received via the communication interface (106), not displaying the icon (116) for activating the messaging application on the display (104).

**2.** The electronic communication device (100) of claim 1, wherein the processor (114) is further capable of detecting an input at the input interface (102), wherein the processor (114) causes the icon to be displayed in response to the detecting of the input.

**3.** The electronic communication device (100) of any of claims 1 to 2, wherein the processor (114) is further capable of causing a task switcher (600) comprising the icon (116) to be displayed on the display (104).

**4.** The electronic communication device (100) of claim 3, wherein the task switcher (600) further comprises another icon (604) for activating another application, the other icon (604) of the other application being displayed irrespective of the new message being received via the communication interface (106).

**5.** The electronic communication device (100) of any of claims 3 to 4, wherein the processor (114) is further capable of causing the task switcher (600) to be scrolled in response to a scrolling input detected at the input interface (102).

**6.** The electronic communication device (100) of any of claims 1 to 5, wherein the icon (116) comprises an indication (400) of an unread status of the new message.

**7.** The electronic communication device (100) of any of claims 1 to 6, wherein the processor (114) is further capable of causing a message count to be displayed in association with the icon (116).

**8.** The electronic communication device (100) of any of claims 1 to 7, wherein the new message is a message received via the communication interface (106) while the messaging application is inactive and since the messaging application was previously activated to display a message listing on the display (104).

**9.** A method for an electronic communication device (100), the method comprising:
checking whether the electronic communication device (100) has received a new message;
when the electronic communication device (100) has received the new message, displaying (302) an icon (116) for activating a messaging application associated with the new message; wherein the icon (116) comprises an indication (400) of a level of urgency of the new message; and
when the electronic communication device (100) has not received the new message, not displaying (300) the icon for activating the messaging application,

**10.** The method of claim 9 further comprising displaying another icon for activating another application irrespective of the new message being received by the electronic communication device (100).

**11.** The method of any of claims 9 to 10 further comprising displaying a status of the new message with the icon of the messaging application.

**12.** The method of any of claims 9 to 11 further comprising placing the application in an inactive state before checking whether the electronic communication device (100) has received the new message, the new message being a message received at the electronic communication device (100) while the messaging application is in the inactive state and since the messaging application was previously activated to display a message listing on the display (104).

**13.** The method of any of claims 9 to 12 further comprising displaying a task switcher (600) comprising the icon (116) on the display (104).

**14.** The method of any of claims 9 to 13, wherein the icon (116) comprises an indication (400) of an unread status of the new message.

**15.** The method of any of claims 9 to 14 further comprising displaying a message count in association with the icon (116).
